# EUROPEAN PATENT SPECIFICATION

(11) **EP 0 686 584 B1**
(45) Date of publication and mention of the grant of the patent: **26.11.1997**
(21) Application number: 95905146.7
(22) Date of filing: 04.01.1995
(51) Int. Cl.: B65G 47/50, B65G 43/00

(54) **INSTALLATION FOR DETECTING THE STATE OF CELLS OF A CONVEYOR CHAIN**
KONTROLLANLAGE FÜR DIE ZELLE EINER TRANSPORTKETTE
INSTALLATION DE CONTROLE DE L'ETAT DE CELLULES D'UNE CHAINE TRANSPORTEUSE

(30) Priority: 05.01.1994 ES 9400011
(43) Date of publication of application: 13.12.1995
(73) Proprietor: ELPAIS S.A., 28037 Madrid (ES)
(72) Inventor: HOLGUERA BORREGO, Francisco, E-28700 San Sebastián de los Reyes (ES)
(74) Representative: Elzaburu Marquez, Alberto
(86) International application number: ES9500003
(87) International publication number: WO9518758

(56) References cited:
- DE-B- 1 185 539
- GB-A- 970 534
- GB-A- 1 338 053

## Description

### Field of the Invention

The present invention relates to an installation for detecting the faults which occur in the cells making up conveyor chains owing to malfunction of one of the parts thereof, intended for procedures for transporting newspapers or other objects during the processes of manufacture, packing or distribution.

### Background of the Invention

In plants which manufacture small- or medium- sized products, there are usually systems for transporting the manufactured products from the manufacturing unit to other units of the plant, such as packing, storage or distribution centres. These transportation systems can be grouped into two types: a) conveyor belts, on which the product is transported in a random manner without being separated into units or groups of units. b) Conveyor chains, in which the product is transported in units or groups of individual units, each one of them allocated to a conveyor cell.

Each conveyor cell of this second type usually has a mechanism for picking up the product, another for securing it for transportation and another for delivering it.

Any malfunction in any of these mechanisms may give rise to the product in the corresponding cell not being picked up, being lost on the way, travelling beyond the destination point or being damaged during the journey.

It may be the case that these cells require individual preventive or corrective maintenance treatments. Similarly, it may be appropriate to have knowledge of the general state of the chain for the purposes of monitoring the cost of the damaged product and delays in the transportation process owing to a system malfunction. Even when conveyor chains are included within the production system, as may be the case for production of a newspaper, poor quality in the system may introduce delays into production which it is appropriate to evaluate and correct as a consequence.

The large number of conveying cells which sometimes make up these chains and the high speed at which they usually work make the task of locating individual faults in their mechanism very difficult and laborious and, therefore, costly.

### Summary of the Invention

One of the objectives of this invention is, therefore, to equip these chains with a monitoring system which will provide information as to the state of quality overall and of each one of the conveying cells which make up the chains, which may give rise to a considerable economic saving in terms of the maintenance of said chains and continuous monitoring of the state of quality, which will make it possible to assess the cost of any malfunction in it and will serve as an aid to choosing the moment for carrying out corrective maintenance, when the quality indices of the chain so advise, meanwhile

These objects are attached by an installation according to claim 1.

This system permits the location of faults in the conveying cells and knowledge of its state of quality, in conveying chains, by means of the system for detecting and statistically monitoring those cells which continuously or intermittently do not fully comply with their purpose of pickup, transportation or delivery of the product at the destination stations without damage to said product. Faults in each cell are transmitted by the system to a data-processing centre so that any necessary reports may be drawn up for determining the state of the chain and of each one of its cells.

### Brief description of the Drawings

The fundamental advantages and characteristics of the invention will be clearly revealed in the following description of an embodiment illustrated in the attached drawings, in which:
Fig. 1 is a general block diagram of the monitoring installation of the invention,
Fig. 2 shows the diagram of a cell counter used in the installation of the invention,
Fig. 3 shows the diagram of a discriminator used in the installation of the invention, and
Fig. 4 gives a block diagram of a communications module incorporated into the installation of the invention.

### Detailed description of the invention

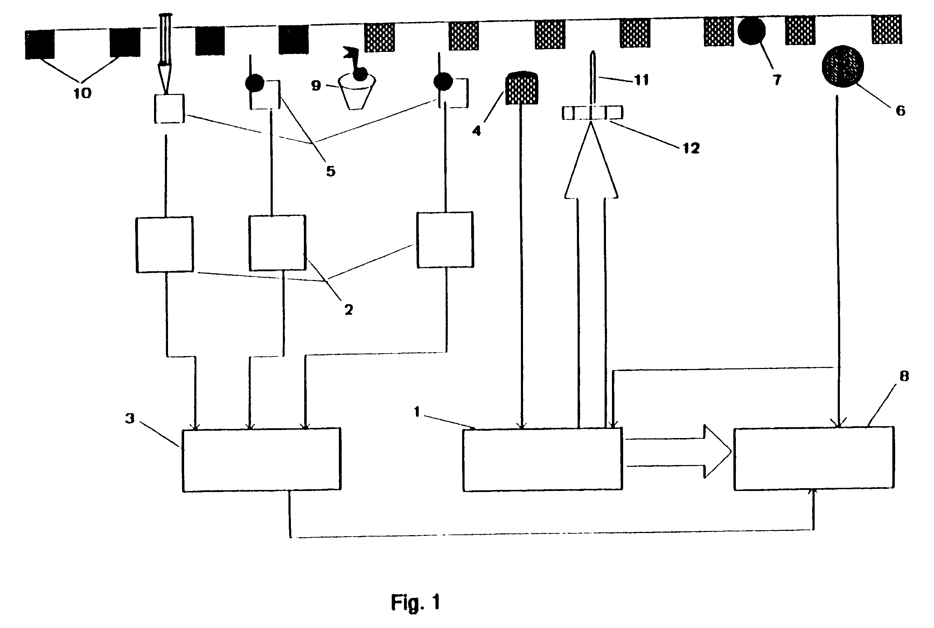

With reference to Fig. 1, it is pointed out that the monitoring installation of the invention has four fundamental modules or parts: cell counter (1) with reset to zero and error detection, shift registers (2), fault detector with discriminator (3) and communications module (8). Together with these fundamental parts, the system will have detectors (4) for detecting the passage of the cells, locating the faults therein (5), and setting the counter to zero upon each complete revolution of the chain (6).

The system allocates a number to each cell, by incrementing a counter with the signal pulses which arrive from the cell passage detector. The counter is initialized to zero on the basis of the signal produced by a reflecting, magnetic, etc. element located at a random point of the chain (7), on passing and being detected at a specific point on its path by another detector element (6). Other detectors located at suitable points on the path generate a signal each time it is detected that a cell has not arrived with the product at its destination, goes beyond the destination point with the product or the product arrives damaged, if there is a detector available for this purpose. It is assumed, in principle, that this cell is not fulfilling its function correctly. In this case, the system sends the corresponding number of this cell, together with coded information about the type of fault which has occurred, to a data-processing system for processing.

When the same fault is repeated in a sequence of adjacent, cells over a preset number of cells, the system discriminates this sequence and does not regard the cells making it up as bad because it is assumed that these anomalies are due to external causes or to operating modes such as empty running or the like, and not to an actual fault in the cell.

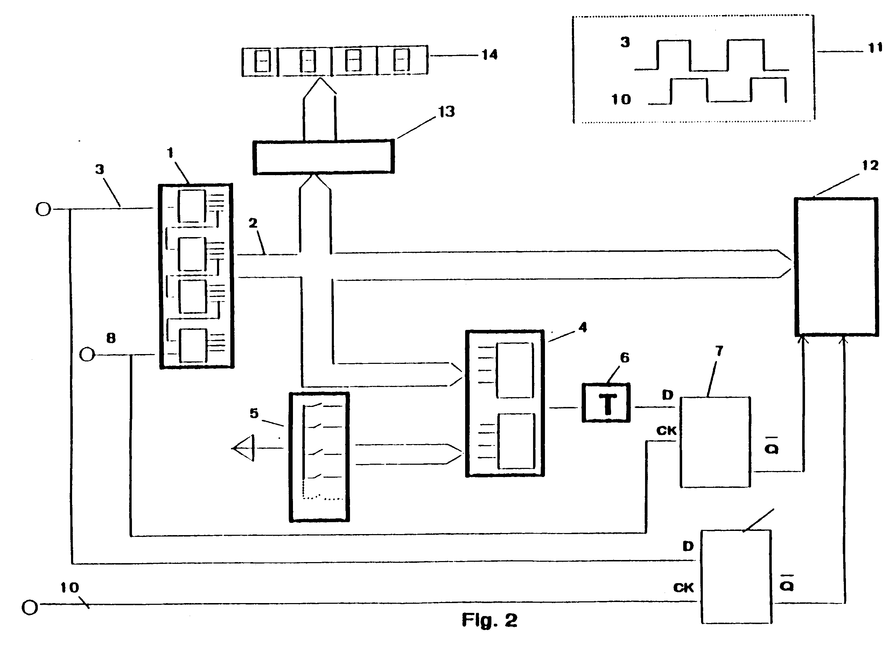

The counter, whose diagram is shown in Fig. 2, is formed by: a) electronic counters (1) which, at their output (2), exhibit the code corresponding to the number of the last cell detected; the output is incremented upon each pulse of the signal from the cell passage detector (3). b) Optional counter error detector formed, in turn, by an electronic comparator (4) and a series of switches (5) which represent the total number of cells making up the chain, in the same code used by the counters. The output data from the counters are compared with those from the switches and the result is applied, with a short delay, in tripping (6) to a bistable (7) whose clock (ck) consists of the zero-reset signal of the counters (8). The number of bits compared may be the total of the outputs from the counter or only part of those of lower relative significance, depending on the precision required for the error detector. If the output of the comparator at the time of the rising edge of the initialization signal is a logic one, the inverted output from the bistable (/Q) will remain as logic zero; in the opposite case, it will become "one", generating an error signal which will be maintained until the next revolution of the chain. c) Optional detector for detecting an error in the cell passage signal, formed by a bistable (9) to which the cell passage signal (3) is applied and whose clock is another passage detection signal (10) originating from another auxiliary cell detector installed for this purpose, spaced by a few cells from the main detector and synchronized with the latter so that the rising edge of the signal from the auxiliary detector coincides with the high part of that of the main detector, as may be seen in the timing diagram (11). Any signal fault of the main detector will make the inverted output (/Q) of the bistable a logic one, generating an error signal which remains up to the arrival of the next cell. The output data from the counters and the error signals are delivered to the communications module (12), which is described hereinbelow, for processing and subsequent transmission to the data-processing centre.

The monitoring point (11) will be that point at which the number of the cell signalled on the counter coincides with the cell corresponding to said number; however, the points where the faults in the cells are detected are located at other different points of the chain. The shift registers will be electronic circuits and their purpose is to delay the fault signals by as many cell passage pulses as there are cells between the corresponding fault detector and that of the monitoring point so as to make the number corresponding to the cell in which an anomaly has been detected, present at the output of the counter, coincide with the arrival of the fault signal of the same cell. They must be programmable in order to be able to set the exact number of the difference signalled by means of microswitches.

However, optionally, the monitoring point may be offset, if this is deemed appropriate for maintenance tasks, by the required number of cells via the procedure of placing another detector of the zero-resetting of the counters at another point on the path and switching to it via an electrical switch as per (4) in Fig. 1.

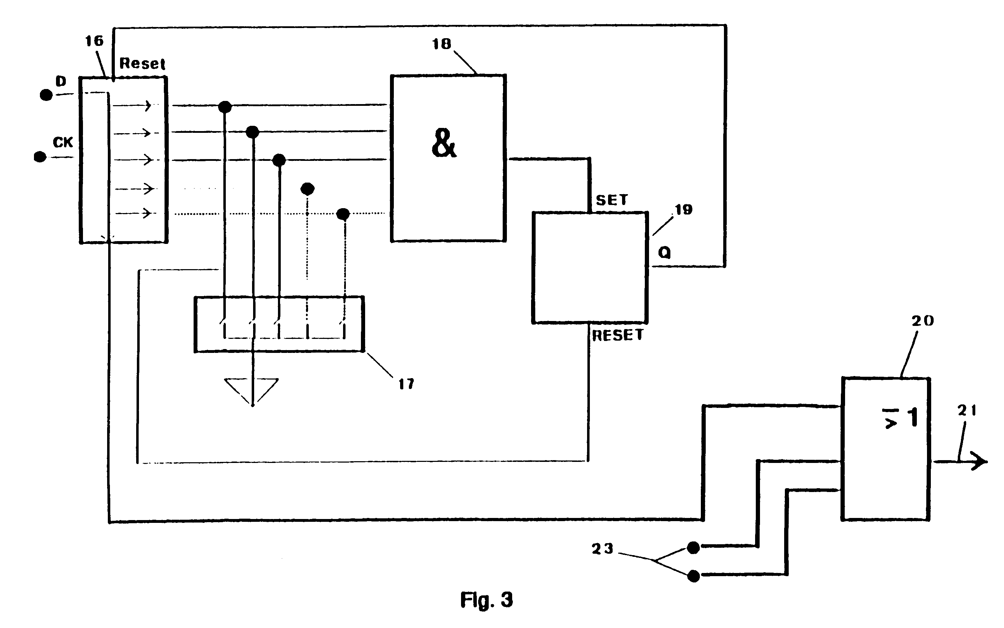

Sometimes, the conveying chains do not carry a product even though they are in motion and their cells are in perfect condition, this being for various reasons; empty running for maintenance purposes, lack of product at the delivery station, the products having been released at a defective product station, etc.; a similar case may apply to the remaining anomalies detected. The purpose of the discriminator (Fig. 3) is to prevent the passage of anomaly signals, such as the signal for a cell without a product, which are repeated a number of times which is equal to or greater than the number preset by means of microswitches, and is formed by shift registers or decade counters (16) with parallel output, an "AND" logic gate (18), a latch or bistable (19) and the switches (17) where the minimum number of faults to be determined is set. The fault signals appearing at the input D of the shift register are shifted across the parallel output according to the clock sequence K formed by the gripper passage detection signal. Each time a fault signal is repeated the pre-set number of times, the output of the "AND" logic gate is placed in logic state "1", which makes the bistable (19) adopt the "set" state with the output Q at "1", remaining in this state whilst the sequence of faults continues and preventing the passage of these faults towards the communications module. If a fault-free cell appears, the bistable changes to the "reset" position, putting the system in normal operation. The "OR" logic gate (20) permits the passage of signals (23) which originate from other fault detectors, with or without discriminator, the output (21) to the communications module being activated.

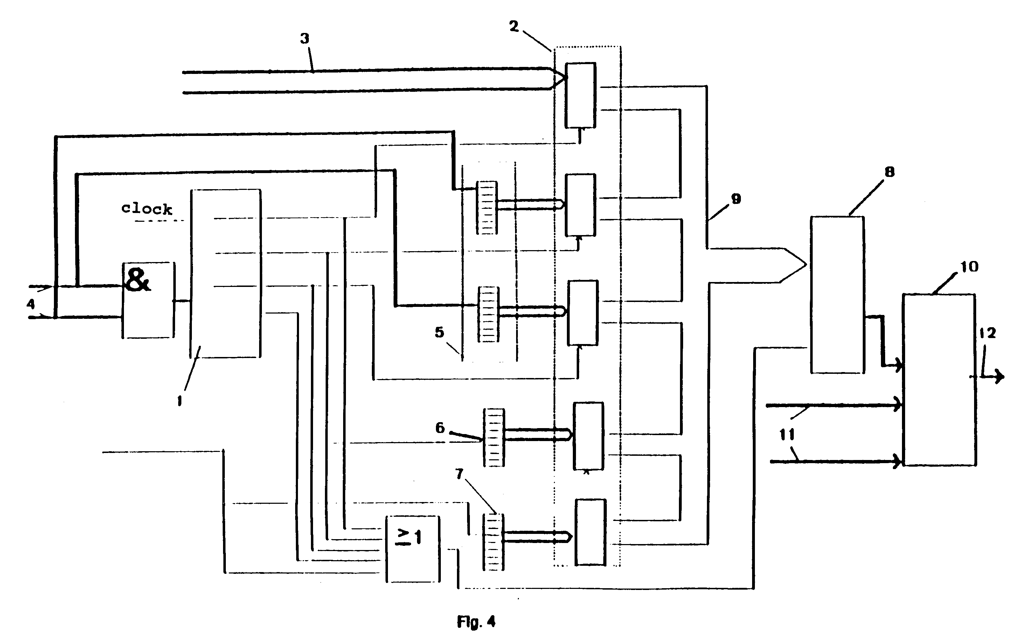

The communications module, whose block diagram is shown in Fig. 4, receives, from the counter, the code corresponding to the cell which, at any time, is at the monitoring point; meanwhile, it can receive cell fault signals (after a shift in the shift registers and monitoring by the discriminator), and, when this occurs, it transmits the code of the number of the gripper and of the type of fault occurring to the data centre; in addition, it can transmit other data of interest for processing; separation codes, code for the type of fault occurring in the corresponding cell, indicator code for each revolution of the chain, etc. It consists of a sequencer (1) which generators a sequence of signals each time a fault signal is detected; these signals actuate the latches (2) or devices for transferring data to the data bus (9). The fault-type signals (4) set up using microswitches (5) generate the fault-type codes which pass to the data bus (9) at the corresponding moment in the sequence. Other, optional, switches may exhibit autonomous codes of the module, such as the code for the data sequence separator or number identifying the equipment, when systems corresponding to different chains send data to one and the same processing centre. Optionally, the internal codes may be combined with those of the fault type so that one and the same code unequivocally identifies the type of fault and the system which is generating it; for example, the decimal codes "1" and "2" could be allocated to the cell-without-product faults before the first diversion and cell-with-product faults after the last point of delivery of a chain, and the codes "3" and "4" allocated to faults of the same type but from a different chain; in this way, the data-processing programme can differentiate between different systems and types of fault without the need to send specific system identification codes. The codes present on the data bus are transferred to a communications interface (8). The independent codes not controlled by the sequencer, such as the code for a complete revolution of the chain, may be controlled directly by an external signal (7), such as the signal for initiating the counters.

The interface may be connected to a concentrator (10) to which may be connected signals (11) from other systems of other chains which share the communications line (12) and the data-processing equipment.

The block-type representation of the system corresponds to a development basically achieved with electronic components; however, many of the functions of the blocks could be executed by a programmed micromonitoringler or microprocessor, which might make the system more flexible, particularly when it is fitted to different systems, without this affecting its basic functions.

## Claims

1. Installation for detecting and monitoring function faults in the cells forming a chain for conveying product elements, in which, on the basis of the signals generated by a chain revolution initiation detector and by a cell passage detector, the system allocates a number to each one of the cells by incrementing a counter, and on the basis of cell function fault detectors makes, the number shown by the counter coincide with the number corresponding to the cell where the malfunction has been detected, sends said number and the code corresponding to the type of fault to a data processing centre, the installation consisting of three basic modules: a) a cell counter (1) with initialisation at zero at a point of the chain, which also incorporates the corresponding decoder for a luminous panel; b) programmable shift registers (2) for making the number of the cell in which a fault has been detected coincide with the number of the counter; c) an optional fault discriminator (3) which incorporates a filter for sequences of faults in excess of a pre-set number; and d) a communications module (8) capable of sending the codes corresponding to the cells which are faulty and other codes identifying the type of fault, the revolutions of the chain, the number identifying the chain and those regarded as necessary for identification and processing of the data sent.

2. Installation according to Claim 1, characterized in that it makes it possible to connect several systems belonging to different chains to one and the same transmission line, the data bearing codes identifying the chain to which they belong.

3. Installation according to Claims 1 and 2, characterized in that it optionally incorporates a programmable element for discriminating sequences of faults.

4. Installation according to Claims 1 to 3, characterized in that it incorporates programmable shift registers which make it possible to place the different detectors independently at any point of the chain without this affecting the identification of the number of the cell exhibiting the anomaly.

5. Installation according to Claims 1 to 4, characterized in that, optionally, it may incorporate a system for switching the counter initialization element which makes it possible to locate the monitoring point at any location of the chain, for maintenance tasks.

6. Installation according to Claims 1 to 5, characterized in that it makes it possible for a data-processing programme to supply information in real time or off-line, by means of statistical monitoring, relating to the state of quality of the individual cells of a conveying chain and of the chain overall.

7. Installation according to Claims 1 to 5, characterized in that it optionally incorporates a system for monitoring a fault in the cell passage detector element.

## Patentansprüche

1. Anlage zum Feststellen und zur Kontrolle von Betriebsfehlern bei Zellen, die eine Transportkette von Produktelementen ausmachen, bei der, ausgehend von den von einem Detektor für den Kettenumkehrbeginn und von einem Detektor für den Zellensvorschub erzeugten Signalen, das System jeder Zelle eine Nummer zuweist, die auf einem Zähler registriert wird und, ausgehend von anderen Betriebsfehlerdetektoren der Zellen, bewirkt, daß die vom Zähler angegebene Nummer mit der Nummer der Zelle, bei der der Fehlbetrieb festgestellt worden ist, übereinstimmt und diese Nummer und den der Fehlerart entsprechenden Code an ein Datenverarbeitungszentrum weitergibt, wobei die Anlage aus drei Hauptmoduln besteht: a) ein Zellenzähler (1) mit Nullstellung an einem Punkt der Kette, der außerdem dem entsprechenden Decoder für ein Leuchtpaneel enthält; b) programmierbare Versatzregister (2), um die Nummer der Zelle, bei der ein Fehler festgestellt wurde, mit der Zählernummer in Übereinstimmung zu bringen; c) gegebenenfalls ein Fehlerdiskriminator (3), der einen Filter für größere Fehlersequenzen als eine vorgegebene Nummer beinhaltet; und d) ein Kommunikationsmodul (8), der die den Fehler aufweisenden Zellen entsprechenden Codes senden kann, sowie andere Codes zur Identifizierung des Fehlertyps, der Kettenumläufe, der Kettenidentifikationsnummer und solche, die zur Identifizierung und Verarbeitung der übermittelten Daten als notwendig betrachtet werden.

2. Anlage nach Anspruch 1, dadurch gekennzeichnet, daß sie die Verbindung von mehreren, zu verschiedenen Ketten gehörenden Systemen mit einer und derselben Transmisionslinie gestattet, wobei die Daten Coden zür Identifizierung der Kette aufweisen, zu der sie gehören.

3. Anlage nach Ansprüchen 1 und 2, dadurch gekennzeichnet, daß sie nach Wahl ein programmierbares Diskriminationselement für Fehlersequenzen beinhaltet.

4. Anlage nach Ansprüchen 1 bis 3, dadurch gekennzeichnet, daß sie programmierbare Versatzregister aufweist, die die Anbringung verschiedener Detektoren unabhängig an jeder Stelle der Kette gestatten, ohne daß dies die Identifizierung der Nummer der eine Anomalie aufweisenden Zelle beeinträchtigt.

5. Anlage nach Ansprüchen 1 bis 4, dadurch gekennzeichnet, daß nach Wahl ein Umschaltungssystem des Zählerinitialisierungselements eingebaut werden kann, das es gestattet, für Instandhaltungsarbeiten den Kontrollpunkt an jede Stelle der Kette zu legen.

6. Anlage nach den Ansprüchen 1 bis 5, dadurch gekennzeichnet, daß sie es einem Datenverarbeitungsprogramm gestattet, innerhalb einer realen oder verschobenen Zeitspanne über eine statistische Kontrolle Information über den Qualitätszustand der individuellen Zellen einer Transportkette und der Gesamtkette zu vermitteln.

7. Anlage nach Ansprüchen 1 bis 5, dadurch gekennzeichnet, daß sie nach Wahl ein System zur Fehlerkontrolle im Detektorenelement für den Zellensvorschub enthält.

## Revendications

1. Installation pour la détection et le contrôle de failles de fonction des cellules qui composent une chaîne de transport d'éléments de produit dans laquelle, à partir des signaux produits par un détecteur d'initiation de rotation de la chaîne et par un détecteur du passage de cellules, le système attribue un numéro à chacune des cellules par augmentation d'un compteur, et, à partir d'autres détecteurs de faille de fonction des cellules, fait que le numéro marqué par le compteur coïncide avec le numéro qui correspond à la cellule dont on a détecté le mauvais fonctionnement, et envoie le dit numéro et le code correspondant au type de faille à un centre de traitement de données, l'installation comprenant trois modules fondamentaux: a) un compteur (1) de cellules avec initialisation à zéro sur un point de la chaîne, qui, en outre, inclut le décodificateur correspondant pour un panneau lumineux; b) registres de déplacement (2) programmables pour faire coïncider le numéro de la cellule à laquelle on a détecté une faille avec le numéro du compteur; c) un discrimineur de failles (3) optionnel, qui inclut un filtre pour séquences de failles plus grandes d'un nombre préfixé; et d) un module de communications (8) capable d'envoyer les codes correspondants aux cellules qui sont avariées et autres codes d'identification du type de faille, des tours de la chaîne, du numéro qui identifie la chaîne et ceux qui sont considérés nécessaires pour l'identification et le traitement des données envoyées.

2. Installation selon la revendication 1, caractérisée par le fait qu'elle permet de connecter plusieurs systèmes appartenant à des chaînes différentes à une même ligne de transmission, par le fait que les données comportent codes d'identification de la chaîne à laquelle elles appartiennent.

3. Installation selon les revendications 1 et 2, caractérisée par le fait d'inclure, en option, un élément programmable discriminateur de séquences de failles.

4. Installation selon les revendications 1 à 3, caractérisée par le fait d'inclure des registres de déplacement programmables, permettant de placer les divers détecteurs de façon indépendante à n'importe quel point de la chaîne, sans que cela affecte l'identification du numéro de la cellule qui présente l'anomalie.

5. Installation selon les revendications 1 à 4, caractérisée par le fait qu'en option elle peut inclure un système de commutation de l'élément d'initialisation de compteurs, permettant de placer le point de contrôle à tout emplacement de la chaîne, en vue des travaux de maintien.

6. Installation selon les revendications 1 à 5, caractérisée par le fait de permettre un programme de traitement de données de fournir une information en temps réel ou différé, au moyen de contrôle statistique, concernant l'état de qualité des cellules individuelles d'une chaîne de transport et de l'ensemble de la chaîne.

7. Installation selon les revendications 1 à 5, caractérisée par l'inclusion en option d'un système de contrôle de faille dans l'élément détecteur du passage de cellules.
